Europäisches Patentamt

(19) European Patent Office    (11) Publication number:    **0 007 286**

Office européen des brevets    **B1**

(12)    **EUROPEAN PATENT SPECIFICATION**

(45) Date of publication of patent specification: **05.12.84**    (51) Int. Cl.³: **B 29 F 3/01, B 29 D 7/24**

(21) Application number: **79810028.5**

(22) Date of filing: **27.03.79**

(54) **A method for the continuous extrusion and blowing of thin films of plastics material, in particular rigid PVC.**

(30) Priority: **29.03.78 CH 3323/78**
**19.01.79 CH 531/79**

(43) Date of publication of application:
**23.01.80 Bulletin 80/02**

(45) Publication of the grant of the patent:
**05.12.84 Bulletin 84/49**

(84) Designated Contracting States:
**BE DE FR IT LU NL SE**

(56) References cited:
**CH-A- 410 382**
**GB-A-1 171 590**
**US-A-3 486 193**

**DER PLASTVERARBEITER, vol. 21, October 1970, SPEYER/RHEIN (DE), K.P. KLENK "Beitrag zur Werkstoffgerechten Verarbeitung von PVC hartpulver auf Ein- und Zwei-Schnecken-Extrudern", pages 881-888**

**The file contains technical information submitted after the application was filed and not included in this specification**

(73) Proprietor: **P.W.T. Plastic World Technology Limited**
**9495 Triesen (LI)**

(72) Inventor: **Tramezzani, Giancarlo**
**Via Lugano**
**CH-6988 Ponte Tresa (CH)**

(74) Representative: **Baggiolini, Raimondo et al Racheli & Fiammenghi Via San Gottardo 15 CH-6900 Lugano (CH)**

Courier Press, Leamington Spa, England.

## Description

The present invention relates to a method for the continuous extrusion and blowing of films of plastics material in particular from rigid polyvinyl chloride powder as raw material avoiding the separation of hydrochloric acid, discoloration, reticulation and for limiting the quantity of additives, which comprises a hopper with a feeding screw and an extruder having a screw with plasticizing calibrated openings.

The production of rigid PVC films is at present in continuous development. The goal to be achieved is the increase in the flow, through extruders operating in a continuous manner and the reliability of the manufacture guaranteeing a high level of quality with reduction of costs.

PVC (polyvinyl chloride) is very sensitive thermally above 100°C. Beyond this temperature it is damaged to an increasing extent by the separation of hydrochloric acid. Due to granulation of the mass which occurs at about 175°—190°C the manufacturing (extrusion) temperatures of about 185°—220°C are only possible by adding to the mass stabilizers and plasticizers which are partially consumed during the heating.

The said stabilizers and plasticizers may influence negatively the quality of the product. With the elimination of the granulation, that is, using the powders that are usable in the method of the present invention, the PVC undergoes only once a high thermal stress and that is during the single extrusion. For that reason discolorations, reticulations and other defects can be diminished or obviated by having recourse to powders.

The quantity of additives, that is of stabilizers and plasticizers may also be diminished if the granulation is avoided which, besides giving a better final product, also results in an economic advantage, since these additives are very expensive.

The heating of the rigid PVC powder in the extrusion machine has however difficulties as the range of temperatures permitted is very limited either due to the resistance opposed to the flow of the material to be plasticized or due to the limited thermal stability.

It is possible that local over-heatings may occur in particular in those parts of the extrusion machine having low thermal conductivity which will lead to thermal damage of the already prestressed mass.

The working of rigid PVC in extruders is furthermore very limited by the low thermal stability of the mass. Attempts to obtain a thermal stress as low as possible is opposed by the need to obtain products of high quality by means of high working temperatures and for that reason low resistances to blow. High temperatures of the mass are possible only for short intervals of time so that the mass is not damaged.

The thermal decomposition of the PVC during the manufacture is characterized as indicated by the separation of hydrochloric acid, by the self-oxidation and by the reticulation. Low thermal damages which do not influence the method of extrusion may instead cause discolourization as well as by the diminution of the mechanical qualities of the product. Considerable thermal damages may be noted in the form of streaks which are firstly of a light chestnut colour and then become dark chestnut before completely carbonized pieces arrive on extrusion. Once the centre of damage has arisen a part of the damaged mass remains attached to the surface of the metal of the extruder and causes an extrusion of the so-called "burning" on the whole mass.

Upon the appearance of the above mentioned streaks it is generally necessary to interrupt the production. After dismantling the drawplate and the screw all the parts which come into contact with the mass must be carefully cleaned. After the renewal of the extruder it requires hours, according to the size of the machine, to arrive at the state of normal production so that the said work of assembly and clearing means a considerable loss of time and therefore of production.

The method according to the present invention permits the difficulties referred to above to be overcome rendering possible the optimum working of the rigid PVC powder with mono-screw extruders and the production of treated films with thin walls of uniform thickness, films which are thermoweldable, perfectly printable and having good resistance to printing inks.

According to U.S. Patent No. 3.486.193, a screw extruder fed with a raw material and provided with an introduction zone, a compression zone, a plasticization zone through calibrated openings, a decompression zone, a degasification zone and an expulsion zone for the material is known.

Furthermore, from the article "Der Plasverarbeiter" Vol. 21, October 1970, a feeding screw used to supply a duly mixed raw material to the introduction zone of the extruder is also known.

The method as claimed in Claim 1 according to the present invention is characterized over that disclosed in US—A—3486193 in that the raw material in the form of powder is fed precompressed continuously in the cold state.

According to a preferred embodiment of the method of the present invention, the precompression is obtained by the combined action of the feeding screw and of the introduction zone of the extrusion screw.

What effect has this precompression on the fed rigid PVC powder which is subject to thermal decomposition with separation of hydrochloric acid, self-oxidation and reticulation?

The raw rigid PVC powder is a very soft material (it is a powder) and has therefore a very bad heat conductivity. This means that if in the extrusion screw the powder is heated in a point at its periphery, the heat cannot be easily transmitted to the middle of the mass; consequently, if the temperature in the heating section of the extrusion screw is sufficiently high, thermal decompositions with separation of hydrochloric acid, self-oxidations and reticulations of the PVC powder may occur, at the periphery of the mass itself, i.e., in the heated points.

But, if according to the present invention, the raw rigid PVC powder is from the beginning precompressed between the feeding screw and the introduction zone of the extrusion screw the heat conductivity coefficient of the raw rigid PVC powder increases remarkably (the mass becomes more compact) so that in the heated zone of the extrusion screw, the heat delivered at the periphery of the mass can easily be transmitted to the inner points of the same, without damaging problems.

In the known method according to the U.S. Patent No. 3.486.193 in the hopper, in the feeding section and in the first part of the compression section only raw PVC powder is present, while only in the last portion of the compression zone, the mass is compressed enough to be heated at sufficiently high temperature without damages. The feeding section 21 and the first part of the compression section 22 of the U.S. and known apparatuses are therefore nearly lost.

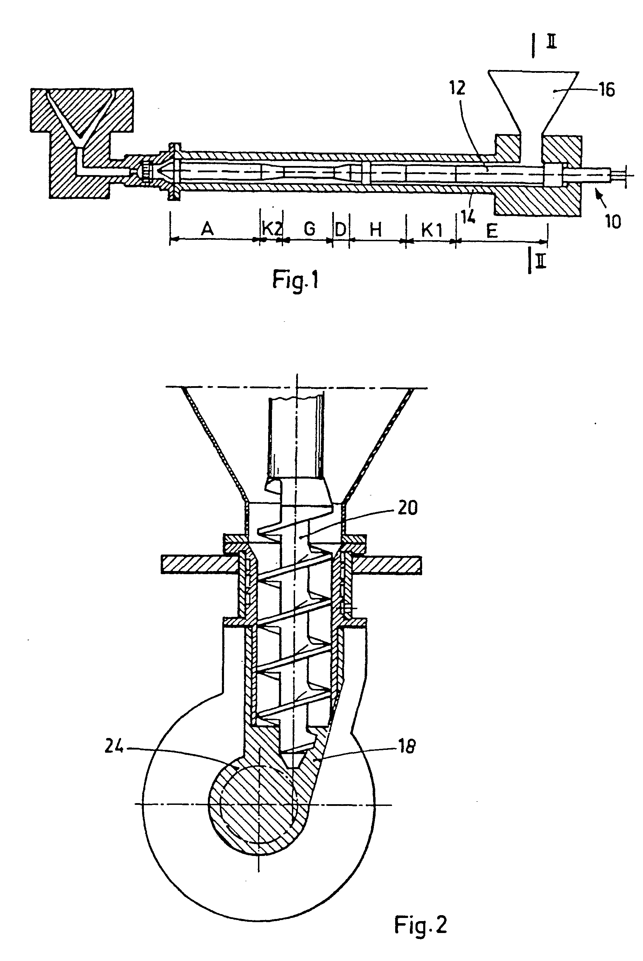

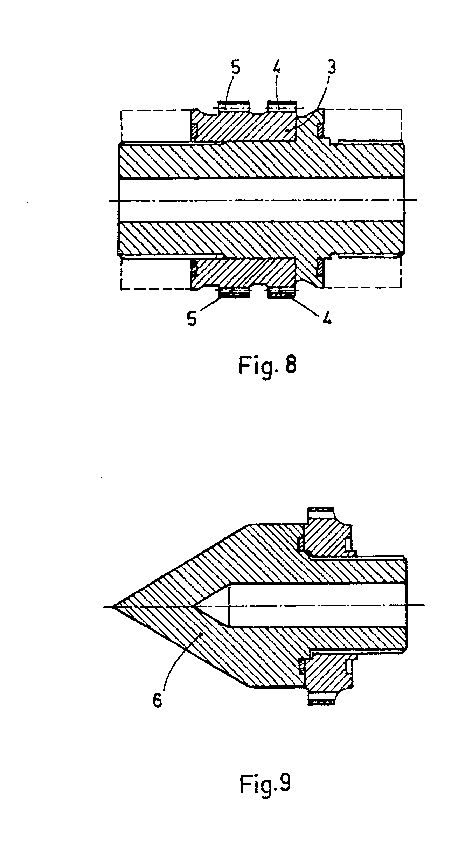

On the contrary, the precompression, according to the present invention, allows to have at the end of the feeding section E (Figure 1) the raw mass compressed, so that it can be heated at a sufficiently high temperature, in order to reach good melting conditions, to pass easily through the calibrated bores (4 and 5 of the flow ring 3 Figure 8) and to give at the end of the screw 12 better plasticity conditions to reach high level of quality of the product, increasing the flow, and reduces the cost.

The present invention will now be better explained in the following two embodiments.

The drawings show:

in Figure 1 an extruder employing the method according to a first embodiment of the invention in very diagrammatic form in longitudinal section;

in Figure 2 a section along the line II—II of Figure 1 on an enlarged scale;

in Figure 3 the longitudinal section of the central zone of the extruder according to Figure 1 on an enlarged scale corresponding to the degasifying zone adjacent to this;

in Figure 4 the section along the line IV—IV of Figure 3 through the degasifying pump on an enlarged scale;

in Figure 5 the partial section V—V of Figure 4 through the piston of the degasifying pump on an enlarged scale;

in Figure 6 the diagram of the path of the shaft of the degasifying pump as a function of the time;

Figures 7a, 7b, 7c, 7d show the various sections constituting the single screw of the extruder employing the method according to a second embodiment of the invention;

Figure 8 shows the enlarged detail of the break flow ring illustrated on a reduced scale in Figure 7b;

Figure 9 shows the front end of the extrusion screw and

Figure 10 the extrusion head in axial section.

The extruder indicated in general in Figure 1 with the reference number 10 shows the extrusion screw 12 lodged in the cylinder 14 of the extruder. From a feed hopper 16 the work material, that is, the resin in powder form mixed with stabilizers and slipping agents is fed under compression by the feed screw 20 (Figure 2) arranged in the channel 18 to the extrusion screw 12 illustrated in Figure 1 passing through the inlet opening 24 (Figure 2).

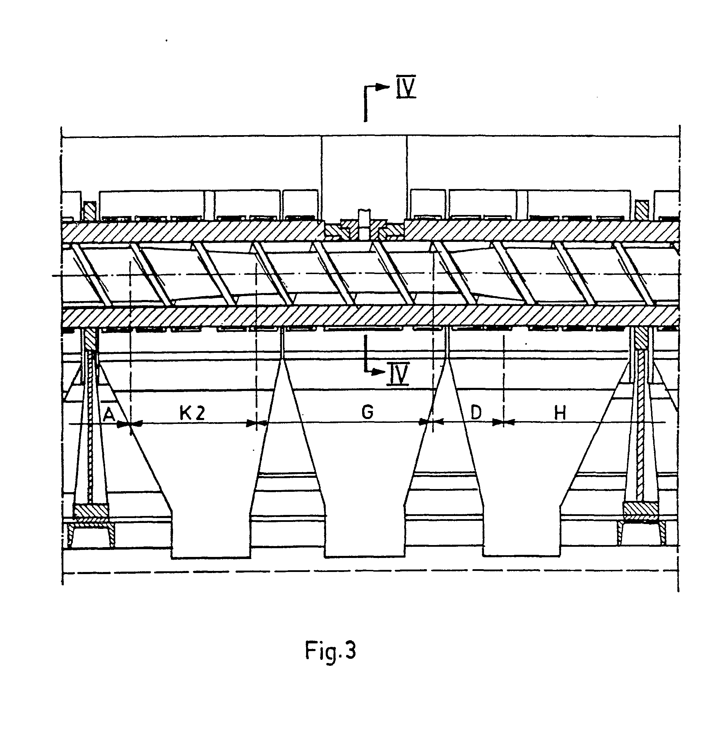

The extrusion screw 12 has seven different zones (see Figures 1 and 3).

In the area of the feed hopper 16 of the material is provided the introduction zone E. In this zone the extrusion screw 12 has almost constant outer diameter, inner diameter and pitch and is preferably without heating means. A first compression zone $K_1$ slightly heated follows the introduction zone E in which the screw has a constant outer diameter, an increasing inner diameter (conical shank) and constant pitch. A heated homogenization zone H follows the first compression zone $K_1$ in which the screw has a constant outer diameter and inner diameter and pitch. A heated decompression zone D follows in which the screw has a constant outer diameter, a greatly decreasing inner diameter and a constant pitch; next comes a heated degasification zone (G) in which the screw has a constant inner diameter but reduced in respect of the aforesaid diameters and a constant pitch.

A second heated compression zone $K_2$ in which the screw has a constant outer diameter, an increasing inner diameter (conical shank) and constant pitch follows the degasification zone G. A heated expulsion zone A, follows the second compression zone $K_2$, in which the screw has a constant outer diameter but limited over a certain length, a constant inner diameter for the same length and tapered at the end in the proximity of the extrusion head and this zone is used to cause the mass to be extruded in a perfectly plasticized tubular form which is subsequently thinned by means of blowing of the tube in the radial direction and stretching in the axial direction.

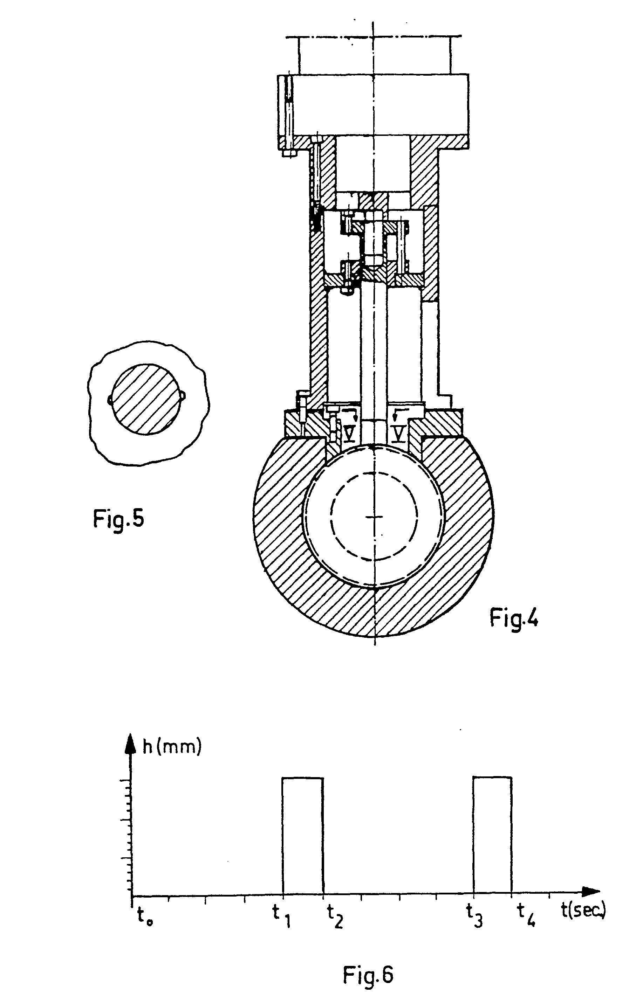

In the diagram of Figure 6, as already indicated, is shown the path in millimetres of the shaft of the degasifying pump as a function of time in seconds.

As can be seen the piston stroke occurs very rapidly corresponding to the time t which is kept constant in the time between $t_1$ and $t_2$ and

returns abruptly to the starting point at the time $t_2$—just as for the times $t_3$ and $t_4$.

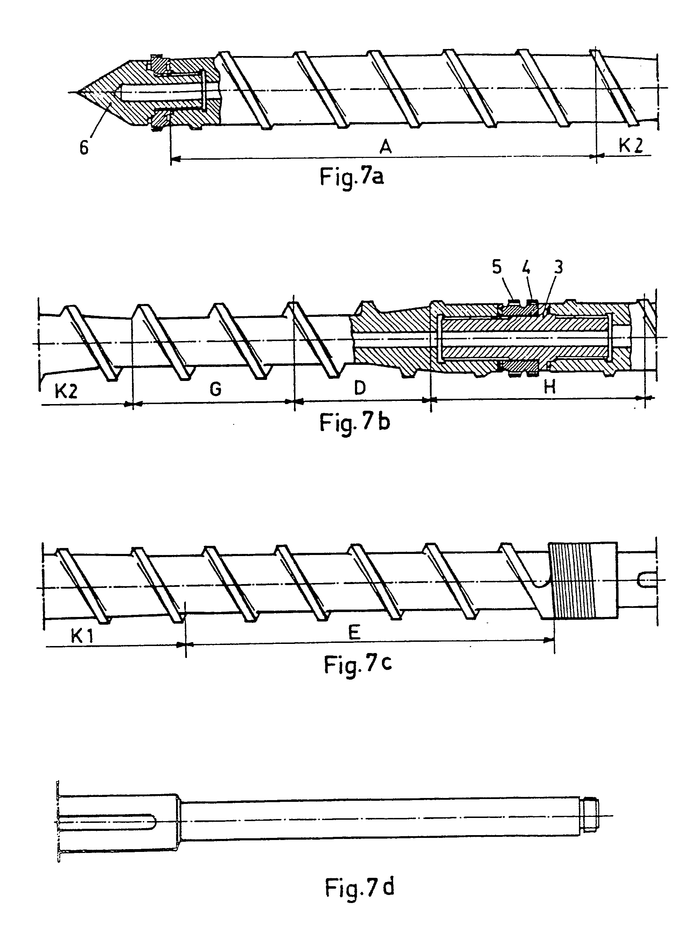

In the extrusion screw illustrated in Figures 7a, 7b, 7c, 7d, the distance E corresponds to the introduction zone of the powder of polyvinyl chloride mixed with stabilizers and slipping agents. The introduction takes place cold at a very low temperature. The compression zone $K_1$ follows, in which the outer diameter of the screw is constant, but the inner diameter increases, only the pitch being constant so as to determine the compression.

The homogenization takes place in the following zone H. In this the outer and inner diameters of the screw and the pitch are constant.

Towards the ends of the homogenization zone is interposed the break flow ring 3 (see Figure 8) having calibrated bores 4 and 5 so as to cause an obstacle to the normal flow of the plastic material along the extrusion screw to force it to become plastic without having to increase the temperature.

This brings about a considerable improvement in the working conditions of the plastics material especially of rigid polyvinyl chloride which is very sensitive to the increases of temperature and is capable of being made plastic with difficulty at relatively low temperature without the intervention of the apparatus now referred to.

The decompression zone D in which the outer diameter and the pitch of the screw are constant whilst the inner diameter decreases rapidly to reduce abruptly the pressure follows the homogenization zone H.

In the following degasifying zone G the outer diameter and inner diameter of the screw are constant and thus also the pitch whilst a suitable pump, not illustrated, provides for removing the gasses.

In the following zone $K_2$ there is a new compression for which the outer diameter and the pitch of the screw are constant whilst the inner diameter increases.

Finally in the expulsion zone A the outer diameter, the inner diameter and the pitch are constant.

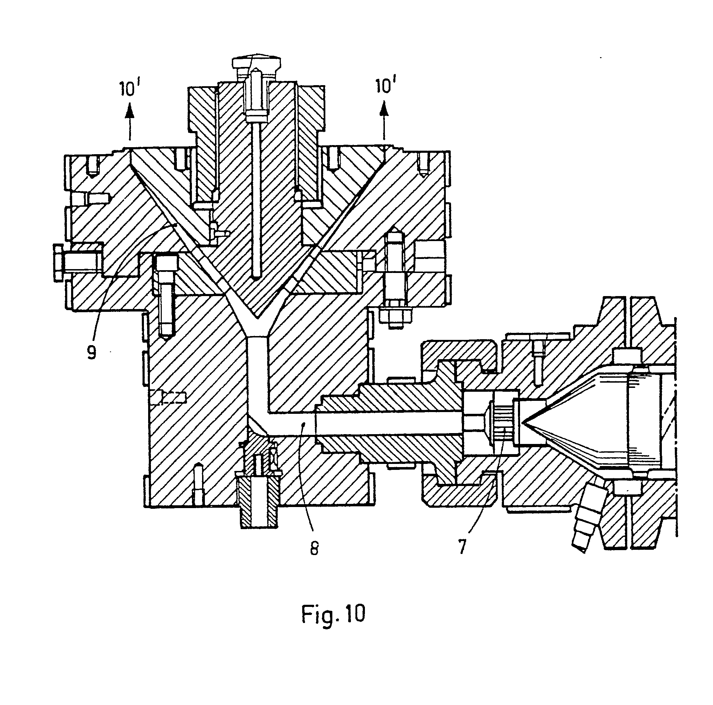

The screw terminates with the pointed head 6 (Figure 9) whilst the raw material, perfectly plasticized, passes through the drawplate 7 (Figure 10), the channel 8, the opening 9 of circular section and leaves at 10 in the form of a tube the thickness of which is gradually diminished by blowing in radial direction and by axial traction.

The drawplate illustrated in Figure 10 can be classified among those of the so-called type "with radii" and has the advantage of a better distribution of the mass in respect of the known "heart-shaped", "spiral-shaped" etc., extrusion drawplates in which the course of the extrusion mass is simpler and the expulsion speed greater.

The most important difference between the cited prior art and the present invention resides therefore in the fact that in the method according to the present invention, the powdered raw material is fed precompressed through the combined action of the feeding screw 20 and the introduction zone E (Figure 1) of the extrusion screw 12 (Figure 1).

**Claims**

1. A method for the continuous extrusion and blowing of films of plastics material, in particular from rigid polyvinyl chloride powder as raw material, avoiding the separation of hydrochloric acid, discoloration, reticulation and for limiting the quantity of additives, in which the raw material in a cold state is precompressed continuously by a feeding screw and then fed into a separate screw extruder provided with plasticizing calibrated openings (4, 5), the material being passed through a first section which is a compression section comprising a hopper (16) with said feeding screw (20), as well as an introduction zone (E), a first heated compression zone (K1), and a heated plasticization zone (H) of the separate extruder; the material then being passed through a second section after said calibrated openings (4, 5) said openings being provided in the heated plasticization zone (H), said second section comprising: a heated decompression zone (D), a heated degasification zone (G), a second heated compression zone (K2) and a heated expulsion zone (A) for the material.

2. A method according to Claim 1, characterized in that the raw material in the form of powder is fed precompressed continuously, in the cold state, by the combined action of the feeding screw (20) and of the introduction zone (E) of the extrusion screw (12).

**Patentansprüche**

1. Verfahren zur kontinuierlichen Erzeugung durch Extrusion und Blasen von Kunststoffolie, insbesondere aus steifem Polyvinylchlorid-Pulver als Rohmaterial, unter Vermeidung einer Abscheidung von Salzsäure, einer Entfärbung und einer Vernetzung und unter Begrenzung der Menge an Zusätzen, bei dem das Rohmaterial in kaltem Zustand kontinuierlich durch eine Zuführungsschnecke vorkomprimiert und dann in einen gesonderten Schneckenextruder eingegeben wird, der mit kalibrierten Plastifizieröffnungen (4, 5) ausgestattet ist, wobei das Material durch einen ersten Abschnitt gefördert wird, der ein Kompressionsabschnitt ist und einen Fülltrichter (16) mit der genannten Zuführungsschnecke (20) sowie eine Einzugszone (E), eine erste beheizte Kompressionszone (K1) und eine beheizte Plastifizierzone (H) des gesonderten Extruders umfasst, und wobei das Material dann durch einen zweiten Abschnitt hinger den genannten, in der beheizten Plastifizierzone (H) vorgesehenen kalibrierten Öffnungen (4, 5) gefördert wird, der eine beheizte Dekompressionszone (D), eine beheizte Entgasungszone (G), eine zweite beheizte Kompressionszone (K2) und eine beheizte Ausstoßzone (A) für das Material umfasst.

2. Verfahren nach Anspruch 1, dadurch gekennzeichnet, daß das pulverförmige Rohmaterial in kaltem Zustand kontinuierlich vorkomprimiert durch die vereinte Wirkung der Zuführungsschnecke (20) und der Einzugszone (E) der Extruderschnecke (12) zugeführt wird.

**Revendications**

1. Procédé pour l'extrusion en continu et le soufflage de feuilles de matière plastique, en particulier à partir de poudre de polychlorure de vinyle rigide comme matière première, évitant la séparation d'acide chlorhydrique, la décoloration la réticulation et pour limiter la quantité d'additifs, dans lequel la matière première à l'état froid est précomprimée en continu par une vis d'alimentation puis amenée dans une extrudeuse à vis séparée équipée, d'ouvertures calibrées de plastification (4, 5), la matière passant à travers une première partie qui est une partie de compression comprenant une trémie (16) et ladite vis d'alimentation (20) ainsi qu'une zone d'admission (E) une première zone chauffée de compression (K1) et une zone chauffée de plastification (H) de l'extrudeuse séparée, la matière passant ensuite à travers une seconde partie après lesdites ouvertures calibrées (4, 5) lesdites ouvertures étant dans la zone chauffée de plastification (H), ladite seconde partie comprenant une zone chauffée de décompression (D), une zone chauffée de dégazage (G), une seconde zone chauffée de compression (K2) et une zone chauffée d'expulsion (A) pour la matière.

2. Procédé selon la revendication 1, caractérisé en ce que la matière première sous la forme de poudre est admise en continu sous précompression à l'état froid par l'action combinée de la vis d'alimentation (20) et de la zone d'admission (E) de la vis d'extrusion (12).

Fig.1

Fig.2

Fig.3

Fig.5

Fig.4

Fig.6

Fig. 7a

Fig. 7 b

Fig. 7 c

Fig. 7 d

Fig. 8

Fig. 9

Fig. 10